# EUROPEAN PATENT SPECIFICATION

(11) **EP 3 137 800 B1**
(45) Date of publication and mention of the grant of the patent: **01.11.2017**
(21) Application number: 15804351.3
(22) Date of filing: 24.11.2015
(51) Int. Cl.: F16L 1/15, B63B 13/00, B63B 35/44

(54) **AN IMPROVED SEAWATER SUCTION SYSTEM**
VERBESSERTES SALZWASSERANSAUGSYSTEM
SYSTÈME D'ASPIRATION D'EAU DE MER AMÉLIORÉ

(30) Priority: 25.11.2014 GB 201420915
(43) Date of publication of application: 08.03.2017
(73) Proprietor: Emstec GmbH, 22113 Oststeinbek (DE)
(72) Inventor: BRINK, Burghard, 8835 Feusisberg (CH); CRAIG, Ian, Hartlepool Cleveland TS26 0AB (GB)
(74) Representative: Murgitroyd & Company
(86) International application number: PCT/EP2015/077479
(87) International publication number: WO 2016/083361

(56) References cited:
- EP-A1- 0 359 392
- WO-A1-2008/017937
- WO-A1-2010/010500
- GB-A- 834 229
- US-A- 4 643 457
- US-A- 4 731 177
- US-A- 4 816 148
- US-A1- 2005 146 139

## Description

The present invention relates to a seawater suction system particularly, although not exclusively, suited for use with a Floating Production Storage and Offloading (FPSO) vessel.

### Introduction

Conventional seawater suction systems used by FPSO vessels typically comprise a plurality of hoses and caissons. Each hose typically comprises a plurality of flexible hose sections interconnected to form a continuous hose. The continuous hose combines with a caisson on the FPSO to pass seawater into the FPSO. The free end of the hose is fitted with a suction strainer for straining sea water which is drawn into the hose. The suction strainer is fitted with a hypochlorite dispersion ring, which is used to disperse hypochlorite around the suction strainer as seawater is drawn through the hose, thereby preventing marine growth in the suction system and the associated pipework of the FPSO. An example of such an arrangement can be seen in WO2008/017937 to the same applicant. WO2010/010500 discloses also a seawater suction system according to the preamble of claim 1. Each of the hose sections of such conventional suction systems is typically manufactured from number of layers of material, starting with a flexible rubber liner in which a plurality of steel or wire reinforcement rings are embedded at intervals along the length of the liner. Wrapped around the reinforced liner are a number of layers of a suitable textile ply, and a marine/weather resistant rubber outer layer is placed over the textile ply layers. Steel nipples and flanges are provided at either end of each hose section so that the sections can be attached to one another.
An example of a flexible hose section used in a conventional suction system has a nominal bore, or internal diameter, of 20 inches (508mm) and a length of 11500mm. A hose section having these dimensions and being manufactured in the manner described above would weigh approximately 1900kg, predominantly due to the layers of material needed and the reinforcement rings. The weight of each section of hose presents handling difficulties on the deck of the vessel during installation of the system at sea. Furthermore, the weight of a system comprising a number of these heavy hose sections, along with drag and other hydrodynamic factors, imparts large loadings on the surface vessel.

Additionally, marine growth can occur in conventional flexible rubber hose sections, which necessitates the provision of a Hypochlorite distribution line to counter the marine growth. Providing a Hypochlorite line increases the complexity, cost and time of installing the system.

It is an object of the present invention to obviate or mitigate one or more of the aforementioned disadvantages.

### Summary of the Invention

According to a first aspect of the present invention there is provided a seawater suction system comprising first and second conduits connected to one another so as to form an internal fluid passage allowing fluid communication between the two conduits, wherein the first conduit is formed from at least two layers of a first material and the second conduit is formed from a single layer of a second material which is different from the first material, a suction head connected to a free end of the first conduit; characterised by at least one caisson (24) adapted to receive and hold the suction head of the first conduit, the caisson comprising a suspension apparatus (44), adapted to selectively secure the first and second conduits during assembly, comprising a spring operated mechanism adapted to lockingly engage with the first and second conduit, and a conduit adapter (48, 50) configured to compensate for any difference between the external diameters of the first and second conduits.

The internal fluid passage of the second conduit has an internal diameter that is substantially identical to an internal diameter of the internal fluid passage of the first conduit, and the second conduit has an external diameter that may be less than an external diameter of the first conduit. The internal and external diameters of the first and second conduits may be substantially constant. The first material may be rubber.

The second material may be a plastics material. The second material may be high-density polyethylene (HDPE). The second conduit may comprise at least one flange member having an outer surface of which at least a portion has a parabolic cross-sectional profile. The at least one flange member may further comprise at least one load ring arranged circumferentially around the outer surface at a predetermined distance from an end portion of the flange member.

The system may further comprise a strainer formed in the second conduit. The strainer may comprise a plurality of fluid apertures formed in the second conduit to allow fluid flow into the second conduit. Alternatively, the strainer may be connected to a free end of the second conduit.

The strainer may comprise at least a first strainer member, having a first fluid inlet, a first fluid passage and a first fluid outlet, and a second strainer member, having a second fluid inlet, a second fluid passage and a second fluid outlet, first and second strainer members are fluidly separate, and wherein the first strainer member is adapted to be coupled to the second fluid member so as to form at least a two-stage strainer arrangement with the first and second fluid inlets arranged adjoiningly along a longitudinal axis of the second conduit, and the first and second fluid outlets forming a combined outlet interface fluidly coupleable to the second conduit.

Additionally, the strainer may further comprise at least a third strainer member, having a third fluid inlet, a third fluid passage and a third fluid outlet, fluidly separate from the first and second strainer member, and wherein the third strainer member is adapted to be coupled to the second fluid member so as to form three-stage strainer arrangement with the first, second and third fluid inlets arranged adjoiningly along the longitudinal axis of the second conduit, and the first, second and third fluid outlets forming a combined outlet interface fluidly coupleable to the second conduit.

Advantageously, the first strainer member may be adapted to matingly engage with the second strainer arrangement so as to form a stack along the longitudinal axis, and the second strainer member may be adapted to matingly engage with the third strainer arrangement so as to form a stack along the longitudinal axis.
Preferably, the strainer may be formed from the second material.

The system may further comprise a weight member suspended from a free end of the second conduit. Advantageously, the weight member may be at least a third conduit fluidly coupleable to the second conduit and made of a non-buoyant material when *in-situ.* Preferably, the non-buoyant material is a metal.

The system may comprise a plurality of successive first conduits connected to a plurality of successive second conduits. In other words, a number of first conduits may be connected together in series and then connected to a number of second conduits, which are also connected together in series.
The caisson may be located within the hull of Floating Production Storage and Offloading (FPSO) vessel.

Preferably, the suspension apparatus may be removably coupleable to a top end of the caisson when *in situ.*

The second material may alternatively be a carbon-based steel or reinforced fibreglass. The system may further comprise at least one auxiliary fluid line located within the internal fluid passage of the first and second conduits and adapted to supply a predetermined fluid to the free end of the second conduit. Advantageously, the system may further comprise at least one second auxiliary fluid line arranged parallel to the first auxiliary fluid line and located within the internal fluid passage of the first and second conduits, and adapted to supply the predetermined fluid to the free end of the second conduit. Preferably, the first and second auxiliary fluid line may be fluidly coupled to a dispersion member operably coupled between the second conduit and the strainer, so as to allow the predetermined fluid to flow into the internal fluid passage during use.
According to a second aspect of the present invention there is provided a method of assembling a seawater suction system comprising the steps of: providing at least one first conduit and at least one second conduit, wherein the first conduit is formed from at least two layers of a first material and the second conduit is formed from a single layer of a second material which is different from the first material, and the first and second conduits are connectable together so as to allow fluid communication between the two conduits; connecting the two conduits together; and connecting a suction head to a free end of the first conduit; providing a caisson adapted to receive and hold the suction head, and mounting the suction head and first and second conduits within the caisson. The method may also include the further step of connecting a strainer to a free end of the second conduit.
The method may also comprise the further step of connecting a weight member to a free end of the strainer or second conduit.

The method may also comprise the further step of attaching at least one auxiliary fluid line within the internal fluid passage of the first and second conduits such that the auxiliary fluid line supplies a fluid to the free end of the second conduit.

### Brief Description of the Drawings

An embodiment of the present invention will now be described, by way of example only, with reference to the accompanying drawings, in which:
**Figure 1** shows a seawater suction system comprising a number of conduits;
**Figure 2** is a schematic sectional view of a number of additional components of the seawater suction system located within a Floating Production Storage and Offloading (FPSO) vessel;
**Figure 3** is a sectional view of a detail of the components shown in Figure 2;
**Figure 4** is a sectional view of a further detail of the components shown in Figure 2;
**Figure 5** is a schematic sectional view of a three-stage strainer, each strainer stage having a fluidly separate inlet, fluid passage and outlet, wherein all strainer outlets are combined into a single outlet interface fluidly coupleable to the second conduit;
**Figure 6** is a schematic view of the three strainer members when disassembled into (a) stage one, (b) stage two and (c) stage three;
**Figure 7** is a perspective view of a suspension apparatus installed to the caisson top on, for example, an FPSO platform, securing a first conduit during assembly, and
**Figure 8** is a perspective schematic view of the suspension apparatus of Figure 7 with one spring-loaded engagement member opened,
**Figure 9** is a side view of a second conduit (HDPE) comprising a dedicated flange having an outer surface with a parabolic cross-sectional profile and a circumferential load ring, therefore providing improved strength and fatigue characteristics, and

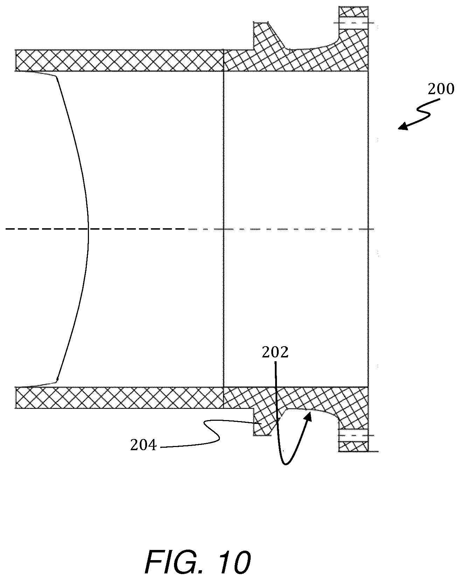

**Figure 10** is a close-up cross-sectional view of the dedicated flange of Figure 9.

### Detailed description of the preferred embodiment(s)

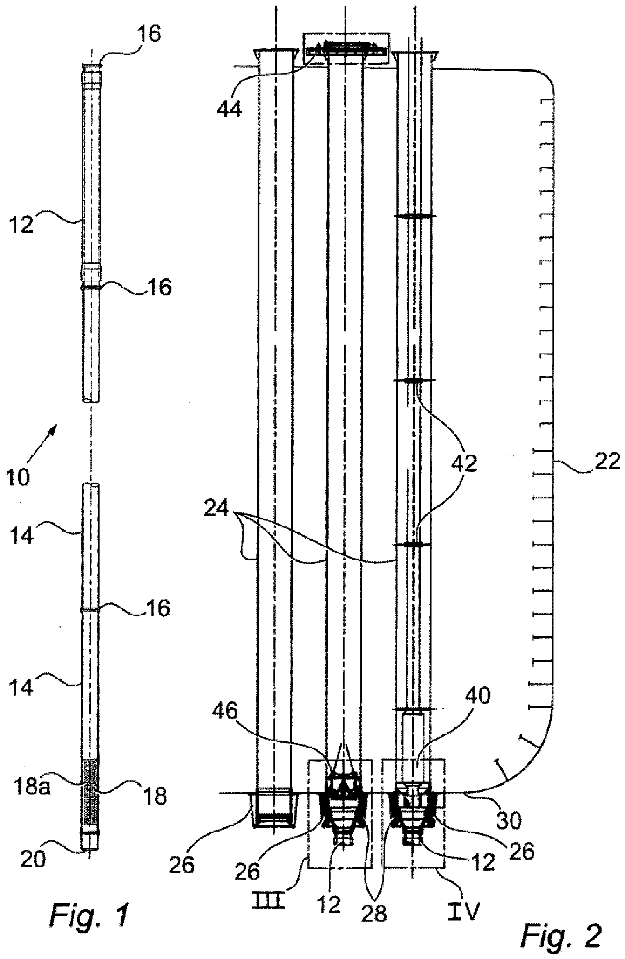

Figure 1 shows a seawater suction system 10 comprising a first conduit 12 and a pair of second conduits 14 connected in series with the first conduit 12. Each of the first and second conduits 12, 14 has a generally cylindrical body forming an internal fluid passageway with connecting means located at either end of the body. In this illustrated example, the connecting means are flanges 16 having a plurality of connecting apertures (not shown) therein. The conduits 12,14 are connected to one another by abutting the corresponding flanges 16 from adjacent conduits 12,14 such that their respective connecting apertures are aligned. A suitable mechanical fixing means such as a studbolt (not shown) is then passed through each of the aligned apertures and a nut tightened onto the end of the studbolt, thereby connecting the adjacent conduits 12,14 to one another. The connecting of the conduits 12,14 is typically undertaken on-board a vessel with which the suction system 10 is to be used. The first conduit 12 is formed from at least two layers of a first material such as, for example, rubber. The first conduit 12 is of a known type having a rubber liner, or inner layer, in which a plurality of steel or wire reinforcement rings are embedded at intervals along the length of the liner. Wrapped around the reinforced liner are a number of intermediate layers of a suitable textile ply, and a marine/weather resistant rubber outer layer is placed over the textile ply layers.

The second conduits 14 are each formed from a single piece or layer of a second material different from the first material. As the second conduits 14 only have a single layer of material and no reinforcing rings, each of the second conduits 14 weighs less than the first conduit 12 despite each conduit 12,14 having substantially the same dimensions. Additionally, each of the first and second conduits 12, 14 has a substantially identical internal diameter. However, because the second conduit 14 has only a single layer of material the second conduits 14 have an external diameter that is less than the external diameter of the first conduit 12. The second conduits 14 are therefore thinner than the first conduit 12. The internal and external diameters of the first and second conduits 12, 14 are preferably constant along their respective lengths.

In the preferred embodiment illustrated, the second material from which the second conduits 14 are formed is high-density polyethylene (HDPE).

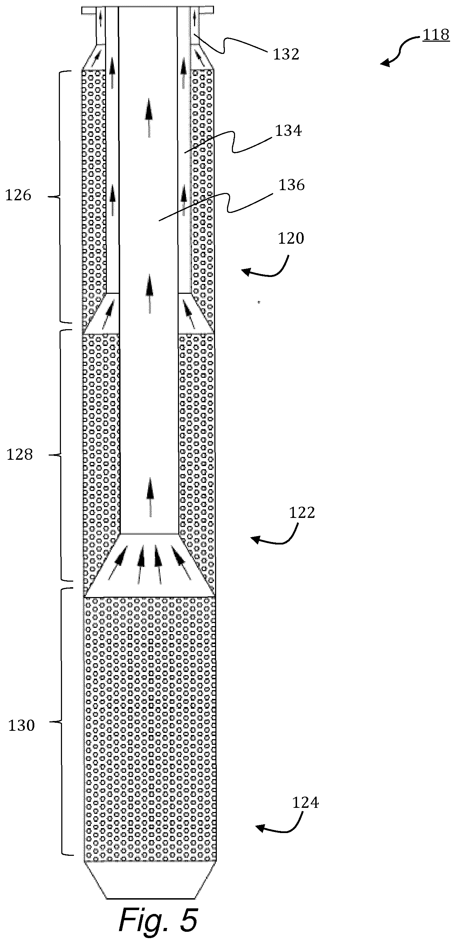

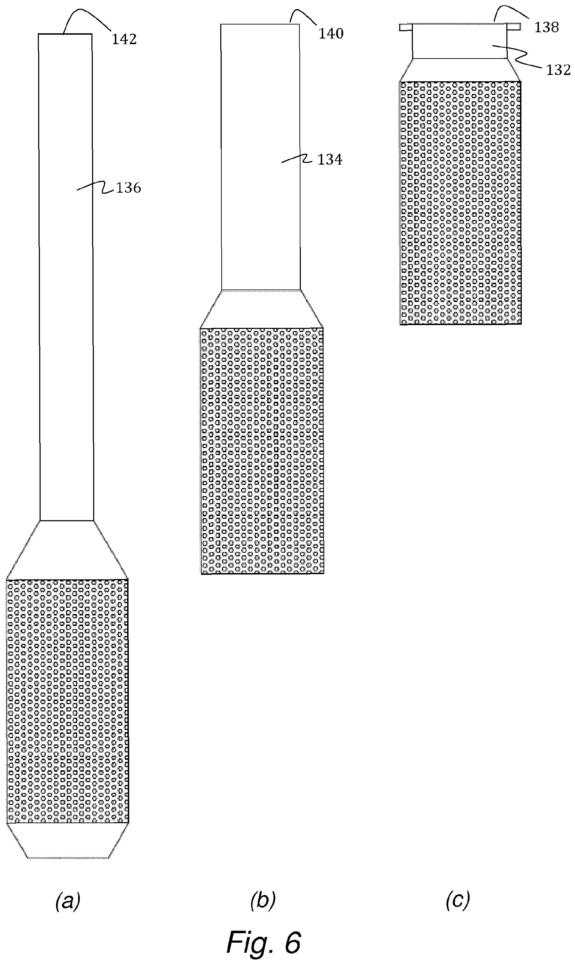

The connecting means of the first conduit 12 are preferably formed from steel and encapsulated in a protective coating of the first material to prevent corrosion. The connecting means of the second conduits 14 are preferably formed from the second material and provided with steel backing rings, which have been treated with a corrosion-inhibiting coating. The lower of the two second conduits 14 (when viewed in Figure 1) is provided with a strainer 18 for use with the system 10. The strainer 18 strains seawater that is drawn through the system 10. The strainer 18 may be formed in the lower second conduit 14 from a plurality of fluid apertures 18a, which allow seawater to pass into the interior of the second conduits 14. In this example embodiment, the fluid apertures 18a each have a diameter of 30mm. Figures 5 and 6 illustrate an alternative embodiment of a strainer 118 that is fluidly coupleable to an end section of the second conduit 14. The strainer 118 comprises three fluidly separate strainer members, first strainer member 120, second strainer member 122, and third strainer member 124, that can be assembled into the three-stage strainer 118. Each of the strainer members 120, 122, 124 comprises a fluidly separate inlet section 126, 128, 130, a fluid passage 132, 134, 136, and an outlet 138, 140, 142. The strainer members 120, 122, 124 are formed in such a way that the second strainer member 122 can be matingly stacked onto the third strainer member 124, and the first strainer member 120 can be maitingly stacked onto the second strainer member 122. When assembled the three outlets 138, 140 and 142 form a combined interface 144 that is fluidly coupleable to the second conduit 14. During use, fluid is moved through all three inlet sections 126, 128, 130 and separately passed through the fluid passages 132, 134 and 136 to exit the combined outlets 138, 140, 142 into the internal fluid passage of the second conduit 14.

The system 10 may also comprise a weight member 20 connected to the free end of the lower second conduit 14 for added ballast. The weight member may be a third conduit (not shown) connected to the second conduit 14 or the strainer 18, 118. The weight member 20 is made from a non-buoyant material, preferably from metal, and even more preferably from steel.

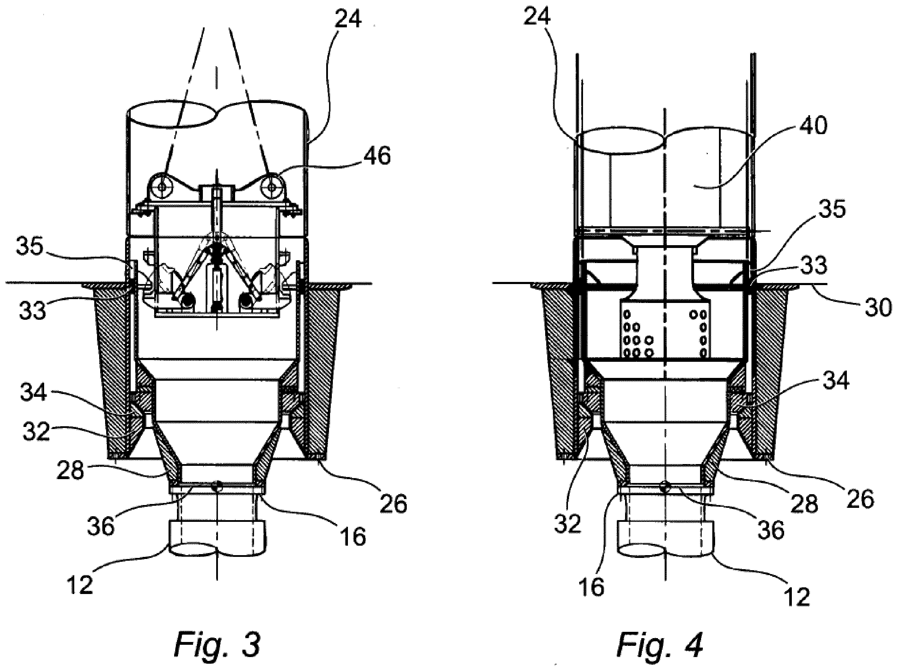

Referring now to Figures 2-4, a schematic section view through the hull 22 of an FPSO vessel is shown in Figure 2, with more detailed views of certain components shown in Figures 3 and 4. Figure 2 shows a number of caissons 24 located within the hull 22. Each caisson 24 may form an additional component of the suction system 10 when the first and second conduits 12, 14 are connected thereto. To facilitate the connection of the first and second conduits 12, 14 to the caisson 24 the system may further comprise a caisson interface, or riser seat, 26 and a riser head or suction head 28. As best illustrated in Figures 3 and 4, each caisson interface 26 is installed on the underside of the keel 30 of the vessel and includes a female conical seat 32 which mates with a male conical seat 34 of the suction head 28 to centralise the head 28 and prevent downward movement of the first and second conduits 12,14. The caisson interface 26 also includes an internal circumferential bearing ring 33 which mates with an external upper circumferential bearing ring 35 of the suction head 28 to prevent tilting of the head 28 relative to the interface 26. The head 28 also includes a connecting flange 36, which is used to connect the upper connecting flange 16 of the first conduit 12 to the head 28. Figures 2 and 4 also show a suction pump 40 deployed in the caisson 24 on the right hand side (when viewed in Figure 2) for sucking seawater into the vessel. A number of centralisers 42 located at intervals within the caisson 24 ensure the pump 40 remains centralised.

Referring to Figures 2 and 3, a suspension tool 44 and a deployment/retrieval tool 46 are shown in the middle caisson 24 (when viewed in Figure 2). These tools 44, 46 are used for the assembly and disassembly of the various components of the suction system 10. The suspension tool 44 is mounted at the top of the caisson 24 and provides a means for securing and suspending the part-assembled suction system in the caisson 24 whilst other components are being fitted.

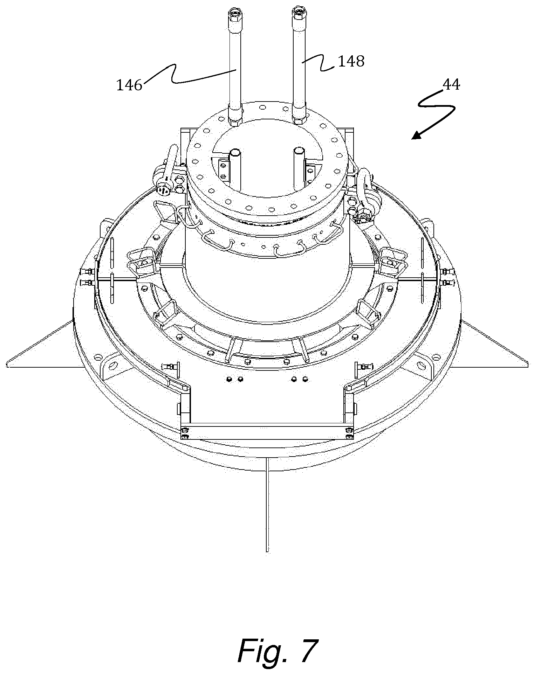

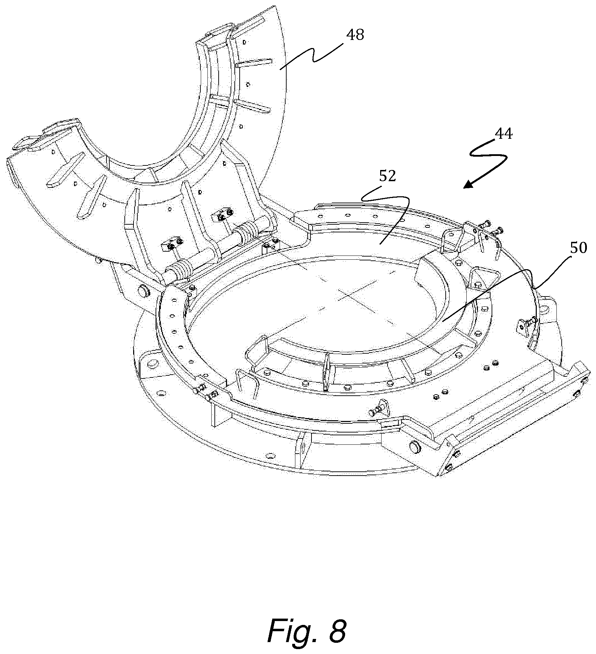

Figures 7 and 8 show a more detailed view of the suspension apparatus or tool 44, when in use and mounted to the caisson top (Figure 7) and as a separate entity in an open, dis-engaged state (Figure 8). The suspension apparatus or tool 44 comprises two spring-loaded engagement members 48, 50 that are operably connected to a mount 52. The mount 52 is adapted to be mounted to the top of a caisson. The spring mechanism of the suspension apparatus or tool 44 is adapted to be hand operated by a user to secure the first or second conduits 12, 14 during assembly, i.e. suspending the conduit string while another conduit section is being connected. In use the user simple moves the spring-biased engagement members 48, 50 into or out of engagement with the conduit 12, 14. In particular, during engagement, the contact surfaces of the engagement members 48, 50 contact the outer surface of the conduits so as to provide a cam-like action, as well as, a friction resistance, securing the conduit in place simply by the gravity force acting on the conduits. The suspension apparatus or tool 44 is lighter in weight and much more compact than a conventional hydraulic suspension tool, therefore, allowing for installations in space restricted areas.

In addition, Figure 7 also shows a section of the second conduit 14 having two auxiliary fluid lines 146, 148 for providing, for example, hypochlorite fluid that are installed within the internal fluid passage of the second conduit 14. The two auxiliary fluid lines 146, 148 are led, for example, to the top of the strainer 18, 118 where they each connect to a separate dispersion ring (not shown) allowing a more concentrated / higher dosage of hypochlorite to be moved into the internal fluid passage of the first and second conduits 12,14. In addition, providing two separate auxiliary fluid lines 146, 148 provides for and increased fluid volume and a degree of redundancy.

The deployment/retrieval tool 46 deploys and retrieves the assembled system 10 to and from the caisson 24. The deployment/retrieval tool 46 is remotely operated for releasing the system once it is in the correct position.

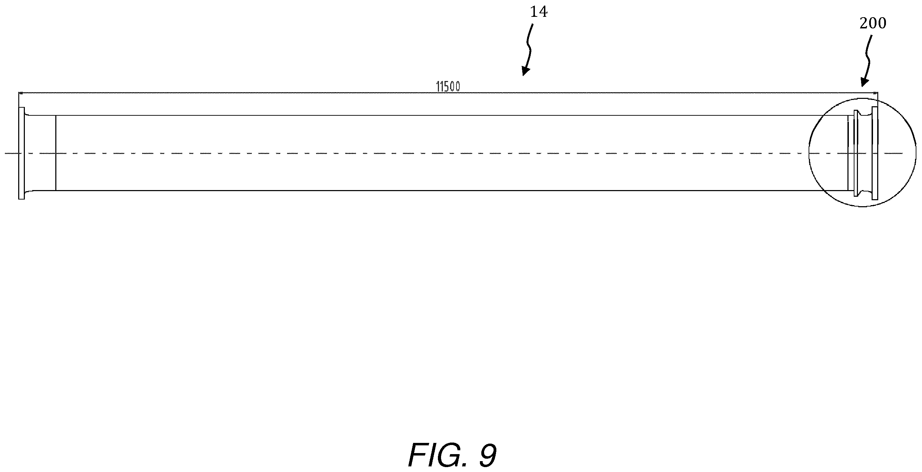

The assembly of the seawater suction system 10 is carried out in a conventional manner, i.e. by suspending each conduit 12, 14 at the top of the caisson 24 whilst each subsequent conduit 12,14 hose section 10 is attached thereto by their respective flanges 16. Preferably, the second conduits (HDPE) 14 may be connected by particularly designed flanges 200 that are configured to provide improved strength and fatigue properties compared to conventional flanges, especially when subjected to the expected forces during assembly of the conduits 14. As shown in Figure 9, a parabolic cross sectional flange profile 202 is provided at the attachment end of the flange member 200 to optimise the stress distribution within the material and thereby minimise "structural hotspots" and consequently maximise its strength and fatigue life.
In addition, when connecting the second conduits 14 (e.g. HDPE), it is necessary to suspend the lower section in the vertical position while the upper section is lowered onto it and connected. The lower section must be able to support the loads applied during assembly and, at the same time, enable the sections 14 to be connected. Accordingly, flange 200 may comprise a load ring 204 configured to have sufficient strength to accommodate for the loads induced during assembly whilst enabling the sections 14 to be connected. The load ring 204 is a circumferential ring integral with the flange 200 so as to allow the dedicated hang-off tool (not shown) to support the hose string while respective flanges 200 can be bolted together without any obstruction.

The suction system 10 is also disassembled in a conventional manner, i.e. by lifting the system 10 toward the top of the caisson 24 and reversing the assembly steps described above.

The seawater suction system of the present invention provides a number of advantages over previous proposals. By comprising the system of a first conduit formed in a conventional manner from layers of rubber or a similarly flexible first material, and one or more second conduits formed from a single layer of a second material, the system has a reduced weight compared to conventional suction systems. However, retaining at least one first conduit of the type described above ensures that the system retains strength and load-bearing capabilities in spite of the weight reduction. Reducing the weight of certain components of the system makes for easier handling of the components during installation and retrieval, with a consequent reduction in the time and cost of carrying out these tasks. Forming the second conduits in a single layer reduces weight and also reduces hydrodynamic loadings on the associated vessel whilst the system is deployed under the water. This reduces vessel draft and improves vessel stability.

If the second conduits are formed from HDPE, the invention has the additional benefit that marine growth cannot form within the second conduits. Marine growth in the system can increase the overall weight of the system, the loadings on the vessel and the drag created by the system. These problems are removed in the present invention without having to resort to the use of a Hypochlorite treatment line in the system. This again speeds up assembly/disassembly of the system and additionally has environmental benefits to the sub-sea ecosystem. HDPE also has an exceptionally smooth surface finish, thereby providing a smoother internal bore in the second conduits. The smoother bore improves flow characteristics in the system whilst at the same time reducing pressure drop across the system.

The illustrated embodiment of the system comprises one first conduit and a pair of second conduits. However, it should be recognised that the number of first and second conduits in the system is not limited to this arrangement and may be varied according to requirements. The minimum requirement for the system is one first conduit and one second conduit. The number of second conduits in the system need only be limited by practical considerations. However, it is preferred that a maximum of three first conduits are used in the system to avoid negating the benefits associated with the system. Where respective pluralities of first and second conduits are used, they are preferably arranged in successive groups instead of alternating the first and second conduits with one another.

Whilst the preferred embodiment of the system shows a strainer formed at one end of one of the second conduits, the strainer may alternatively be a separate component formed from the second material and connected to the free end of the lower second conduit 14.

Whilst preferred, the invention is not limited to the use of second conduits formed from HDPE. Examples of other suitable second materials are carbon-based steel and reinforced fibreglass. A single piece or layer of either of these alternative materials may also be used to form the second conduit(s), with the same benefits in terms of reduction of weight, hydrodynamic forces and drag. Where the second conduits are formed from either of these alternative materials, an auxiliary fluid line is included in the system for the supply of Hypochlorite to the free end of the system.

It will be appreciated by persons skilled in the art that the above embodiment has been described by way of example only and not in any limitative sense, and that various alterations and modifications are possible without departing from the scope of the invention as defined by the appended claims.

## Claims

1. A seawater suction system (10) comprising:
- first (12) and second (14) conduits connected to one another, so as to form an internal fluid passage allowing fluid communication between the two conduits (12, 14), wherein the first conduit (12) is formed from at least two layers of a first material and the second conduit (14) is formed from a single layer of a second material, which is different from the first material;
- a suction head (28) connected to a free end of the first conduit (12) ; **characterised by**:
- at least one caisson (24) adapted to receive and hold the suction head (28) of the first conduit (12): **characterized by**: - the caisson (24) comprising:
- a suspension apparatus (44), adapted to selectively secure the first (12) and second (14) conduits during assembly, comprising a spring operated mechanism adapted to lockingly engage with the first (12) and second (14) conduit, and a conduit adapter (48, 50) configured to compensate for any difference between the external diameters of the first (12) and second (14) conduits.

2. A seawater suction system as claimed in claim 1, wherein the internal fluid passage of the second conduit has an internal diameter that is substantially identical to an internal diameter of the internal fluid passage of the first conduit, and the second conduit has an external diameter, which is less than an external diameter of the first conduit.

3. A seawater suction system as claimed in claim 1 or claim 2, wherein the first material is rubber and the second material is a plastics material, or a carbon-based steel, or reinforced fibreglass.

4. A seawater suction system as claimed in claim 3, wherein the second material is high density polyethylene (HDPE).

5. A seawater suction system as claimed in claim 4, wherein the second conduit comprises at least one flange member (200) having an outer surface of which at least a portion has a parabolic cross-sectional profile (202).

6. A seawater suction system as claimed in claim 5, wherein said at least one flange member further comprises at least one load ring (204) arranged circumferentially around the outer surface at a predetermined distance from an end portion of the flange member.

7. A seawater suction system as claimed in any preceding claim, wherein the system further comprises a strainer (18) formed in the second conduit and including a plurality of fluid apertures (18a) formed in the second conduit to allow fluid flow into the second conduit.

8. A seawater suction system as claimed in any preceding claim, wherein the system comprises a plurality of successive first conduits connected to a plurality of successive second conduits.

9. A seawater suction system as claimed in any of the preceding claims, wherein the caisson is located within the hull of a Floating Production Storage and Offloading (FPSO) vessel.

10. A seawater suction system as claimed in of the preceding claims, wherein the suspension apparatus is removably coupleable to a top end of the caisson when *in situ.*

11. A seawater suction system as claimed in any preceding claim, wherein the system further comprises at least one first auxiliary fluid line (146) located within the internal fluid passage of the first and second conduits and adapted to supply a predetermined fluid to the free end of the second conduit.

12. A seawater suction system as claimed in claim 11, wherein the system further comprises at least one second auxiliary fluid line (148) arranged parallel to the first auxiliary fluid line and located within the internal fluid passage of the first and second conduits, and adapted to supply the predetermined fluid to the free end of the second conduit.

13. A seawater suction system as claimed in claim 12, when depending on claim 11 and any one of claims 7 to 10, wherein the first and second auxiliary fluid line are fluidly coupled to a dispersion member operably coupled between the second conduit and the strainer, so as to allow the predetermined fluid to flow into the internal fluid passage during use.

14. A method of assembling a seawater suction system according to any one of the preceding claims, comprising the steps of:
- providing at least one first conduit and at least one second conduit, wherein the first conduit is formed from at least two layers of a first material and the second conduit is formed from a single layer of a second material, which is different from the first material, and the first and second conduits are connectable together, so as to allow fluid communication between the two conduits;
- connecting the two conduits together;
- connecting a suction head to a free end of the first conduit, and
- providing a caisson adapted to receive and hold the suction head, and mounting the suction head and first and second conduits within the caisson.

15. A method of assembling a seawater suction system as claimed in claim 14, wherein the second conduit comprises a strainer formed in the second conduit and including a plurality of fluid apertures formed in the second conduit to allow fluid flow into the second conduit.

## Patentansprüche

1. Ein Meerwasseransaugsystem (10), das Folgendes beinhaltet:
- eine erste (12) und zweite (14) Leitung, die miteinander verbunden sind, um einen inneren Fluiddurchgang zu bilden, der eine Fluidkommunikation zwischen den beiden Leitungen (12, 14) ermöglicht, wobei die erste Leitung (12) aus mindestens zwei Schichten eines ersten Materials gebildet ist und die zweite Leitung (14) aus einer einzelnen Schicht eines zweiten Materials gebildet ist, welches sich von dem ersten Material unterscheidet;
- einen Saugkopf (28), der mit einem freien Ende der ersten Leitung (12) verbunden ist;
- mindestens einen Senkkasten (24), der angepasst ist, um den Saugkopf (28) der ersten Leitung (12) aufzunehmen und zu halten; **dadurch gekennzeichnet, dass**: der Senkkasten (24) Folgendes beinhaltet:
- eine Aufhängungsvorrichtung (44), die angepasst ist, um die erste (12) und zweite (14) Leitung während des Zusammenbaus selektiv zu sichern, die einen federbetriebenen Mechanismus, der angepasst ist, um arretierend in die erste (12) und zweite (14) Leitung einzugreifen, und einen Leitungsadapter (48, 50), der konfiguriert ist, um jegliche Differenz zwischen den Außendurchmessern der ersten (12) und zweiten (14) Leitung zu kompensieren, beinhaltet.

2. Meerwasseransaugsystem gemäß Anspruch 1, wobei der innere Fluiddurchgang der zweiten Leitung einen Innendurchmesser aufweist, der im Wesentlichen identisch mit einem Innendurchmesser des inneren Fluiddurchgangs der ersten Leitung ist, und die zweite Leitung einen Außendurchmesser aufweist, der geringer als ein Außendurchmesser der ersten Leitung ist.

3. Meerwasseransaugsystem gemäß Anspruch 1 oder Anspruch 2, wobei das erste Material Gummi ist und das zweite Material ein Kunststoffmaterial oder ein Stahl auf Kohlenstoffbasis oder glasfaserverstärkter Kunststoff ist.

4. Meerwasseransaugsystem gemäß Anspruch 3, wobei das zweite Material Polyethylen hoher Dichte (HDPE) ist.

5. Meerwasseransaugsystem gemäß Anspruch 4, wobei die zweite Leitung mindestens ein Flanschelement (200) mit einer äußeren Oberfläche beinhaltet, von der mindestens ein Teil ein parabolisches Querschnittsprofil (202) aufweist.

6. Meerwasseransaugsystem gemäß Anspruch 5, wobei das mindestens eine Flanschelement ferner mindestens einen Lastring (204) beinhaltet, der in einem vorgegebenen Abstand von einem Endteil des Flanschelements im Umfang um die äußere Oberfläche eingerichtet ist.

7. Meerwasseransaugsystem gemäß einem der vorhergehenden Ansprüche, wobei das System ferner ein Filter (18) beinhaltet, das in der zweiten Leitung gebildet ist und eine Vielzahl von in der zweiten Leitung gebildeten Fluidöffnungen (18a) umfasst, um einen Fluidfluss in die zweite Leitung zu ermöglichen.

8. Meerwasseransaugsystem gemäß einem der vorhergehenden Ansprüche, wobei das System eine Vielzahl von aufeinanderfolgenden ersten Leitungen beinhaltet, die mit einer Vielzahl von aufeinander folgenden zweiten Leitungen verbunden sind.

9. Meerwasseransaugsystem gemäß einem der vorhergehenden Ansprüche, wobei der Senkkasten innerhalb des Rumpfes eines Schiffs mit Produktions-, Lager- und Verladesystem (FPSO, Floating Production Storage and Offloading) befindlich ist.

10. Meerwasseransaugsystem gemäß den vorhergehenden Ansprüchen, wobei die Aufhängungsvorrichtung entfernbar an ein oberes Ende des Senkkastens koppelbar ist, wenn *in situ.*

11. Meerwasseransaugsystem gemäß einem der vorhergehenden Ansprüche, wobei das System ferner mindestens eine erste Fluidhilfsleitung (146) beinhaltet, die innerhalb des inneren Fluiddurchgangs der ersten und zweiten Leitung befindlich ist und angepasst ist, um dem freien Ende der zweiten Leitung ein vorgegebenes Fluid zuzuführen.

12. Meerwasseransaugsystem gemäß einem Anspruch 11, wobei das System ferner mindestens eine zweite Fluidhilfsleitung (148) beinhaltet, die parallel zu der ersten Fluidhilfsleitung eingerichtet und innerhalb des inneren Fluiddurchgangs der ersten und zweiten Leitung befindlich ist und angepasst ist, um dem freien Ende der zweiten Leitung ein vorgegebenes Fluid zuzuführen.

13. Meerwasseransaugsystem gemäß Anspruch 12, wenn von Anspruch 11 und einem der Ansprüche 7 bis 10 abhängig, wobei die erste und zweite Fluidhilfsleitung fluidisch an ein Dispersionselement gekoppelt sind, welches betriebsbereit zwischen die zweite Leitung und das Filter gekoppelt ist, um während des Gebrauchs ein Fließen des vorgegebenen Fluids in den inneren Fluiddurchgang zu ermöglichen.

14. Ein Verfahren zum Zusammenbauen eines Meerwasseransaugsystems gemäß einem der vorhergehenden Ansprüche, das die folgenden Schritte beinhaltet:
- Bereitstellen mindestens einer ersten Leitung und mindestens einer zweiten Leitung, wobei die erste Leitung aus mindestens zwei Schichten eines ersten Materials gebildet ist und die zweite Leitung aus einer einzelnen Schicht eines zweiten Materials gebildet ist, welches sich von dem ersten Material unterscheidet, und die erste und zweite Leitung miteinander verbunden werden können, um eine Fluidkommunikation zwischen den beiden Leitungen zu ermöglichen;
- Verbinden der beiden Leitungen miteinander;
- Verbinden eines Saugkopfs mit einem freien Ende der ersten Leitung; und
- Bereitstellen eines Senkkastens, der angepasst ist, um den Saugkopf aufzunehmen und zu halten, und Montieren des Saugkopfs und der ersten und zweiten Leitung innerhalb des Senkkastens.

15. Verfahren zum Zusammenbauen eines Meerwasseransaugsystems gemäß Anspruch 14, wobei die zweite Leitung ein Filter beinhaltet, das in der zweiten Leitung gebildet ist und eine Vielzahl von in der zweiten Leitung gebildeten Fluidöffnungen umfasst, um einen Fluidfluss in die zweite Leitung zu ermöglichen.

## Revendications

1. Un système d'aspiration d'eau de mer (10) comprenant :
- une première (12) et une deuxième (14) conduites raccordées l'une à l'autre, de manière à former un passage de fluide intérieur permettant une communication fluidique entre les deux conduites (12, 14) où la première conduite (12) est formée d'au moins deux couches d'un premier matériau et la seconde conduite (14) est formée d'une seule couche d'un deuxième matériau, qui est différent du premier matériau ;
- une tête d'aspiration (28) raccordée à une extrémité libre de la première conduite (12) ;
- au moins un caisson (24) conçu pour accueillir et maintenir la tête d'aspiration (28) de la première conduite (12) ; **caractérisé par : le fait que** le caisson (24) comprend :
- un appareil de suspension (44), conçu pour assujettir de façon sélective les première (12) et deuxième (14) conduites lors de l'assemblage, comprenant un mécanisme actionné par ressort conçu pour se mettre en prise par verrouillage avec les première (12) et deuxième (14) conduites, et un adaptateur de conduite (48, 50) configuré pour compenser toute différence entre les diamètres extérieurs des première (12) et deuxième (14) conduites.

2. Un système d'aspiration d'eau de mer tel que revendiqué dans la revendication 1, où le passage de fluide intérieur de la deuxième conduite présente un diamètre intérieur qui est substantiellement identique à un diamètre intérieur du passage de fluide intérieur de la première conduite, et la deuxième conduite présente un diamètre extérieur, qui est inférieur à un diamètre externe de la première conduite.

3. Un système d'aspiration d'eau de mer tel que revendiqué dans la revendication 1 ou la revendication 2, où le premier matériau est du caoutchouc et le deuxième matériau est une matière plastique, ou un acier à base de carbone, ou de la fibre de verre renforcée.

4. Un système d'aspiration d'eau de mer tel que revendiqué dans la revendication 3, où le deuxième matériau est du polyéthylène à haute densité (HDPE).

5. Un système d'aspiration d'eau de mer tel que revendiqué dans la revendication 4, où la deuxième conduite comprend au moins un élément formant bride (200) présentant une surface externe dont au moins une partie présente un profil de section transversale parabolique (202).

6. Un système d'aspiration d'eau de mer tel que revendiqué dans la revendication 5, où ledit au moins un élément formant bride comprend en outre au moins un cercle de charge (204) disposé de façon circonférentielle autour de la surface externe à une distance prédéterminée d'une partie d'extrémité de l'élément formant bride.

7. Un système d'aspiration d'eau de mer tel que revendiqué dans n'importe quelle revendication précédente, où le système comprend en outre une crépine (18) formée dans la deuxième conduite et incluant une pluralité d'orifices de fluide (18a) formés dans la deuxième conduite pour permettre l'écoulement de fluide dans la deuxième conduite.

8. Un système d'aspiration d'eau de mer tel que revendiqué dans n'importe quelle revendication précédente, où le système comprend une pluralité de premières conduites successives raccordées à une pluralité de deuxièmes conduites successives.

9. Un système d'aspiration d'eau de mer tel que revendiqué dans n'importe laquelle des revendications précédentes, où le caisson est situé à l'intérieur de la coque d'un bâtiment flottant de production, de stockage et de déchargement (FPSO).

10. Un système d'aspiration d'eau de mer tel que revendiqué dans laquelle des revendications précédentes, où l'appareil de suspension peut être couplé de façon amovible à une extrémité supérieure du caisson lorsque qu'il se trouve *in situ.*

11. Un système d'aspiration d'eau de mer tel que revendiqué dans n'importe quelle revendication précédente, où le système comprend en outre au moins une première ligne de fluide auxiliaire (146) située à l'intérieur du passage de fluide intérieur des première et deuxième conduites et conçue pour fournir un fluide prédéterminé à l'extrémité libre de la deuxième conduite.

12. Un système d'aspiration d'eau de mer tel que revendiqué dans la revendication 11, où le système comprend en outre au moins une deuxième ligne de fluide auxiliaire (148) disposée parallèlement à la première ligne de fluide auxiliaire et située à l'intérieur du passage de fluide intérieur des première et deuxième conduites, et conçue pour fournir le fluide prédéterminé à l'extrémité libre de la deuxième conduite.

13. Un système d'aspiration d'eau de mer tel que revendiqué dans la revendication 12, lorsqu'elle dépend de la revendication 11 et de n'importe laquelle des revendications 7 à 10, où la première et la deuxième ligne de fluide auxiliaire sont fluidiquement couplées à un élément de dispersion fonctionnellement couplé entre la deuxième conduite et la crépine, de manière à permettre au fluide prédéterminé de s'écouler dans le passage de fluide intérieur lors de l'utilisation.

14. Une méthode d'assemblage d'un système d'aspiration d'eau de mer selon n'importe laquelle des revendications précédentes, comprenant les étapes consistant à :
- fournir au moins une première conduite et au moins une deuxième conduite, où la première conduite est formée d'au moins deux couches d'un premier matériau et la deuxième conduite est formée d'une seule couche d'un deuxième matériau, qui est différent du premier matériau, et les première et deuxième conduites peuvent être raccordées entre elles, de manière à permettre une communication fluidique entre les deux conduites ;
- raccorder les deux conduites entre elles ;
- raccorder une tête d'aspiration à une extrémité libre de la première conduite, et
- fournir un caisson conçu pour recevoir et maintenir la tête d'aspiration, et monter la tête d'aspiration et les première et deuxième conduites à l'intérieur du caisson.

15. Une méthode d'assemblage d'un système d'aspiration d'eau de mer tel que revendiqué dans la revendication 14, où la deuxième conduite comprend une crépine formée dans la deuxième conduite et incluant une pluralité d'orifices de fluide formés dans la deuxième conduite afin de permettre l'écoulement de fluide dans la deuxième conduite.
